# EUROPEAN PATENT APPLICATION

(11) **EP 2 404 884 A1**
(43) Date of publication of application: **11.01.2012**
(21) Application number: 10290266.5
(22) Date of filing: 19.05.2010
(51) Int. Cl.: C04B 24/36, C04B 28/02, C09K 8/473

(54) **Compositions and methods for well treatment**

(71) Applicant: Services Pétroliers Schlumberger, 75007 Paris (FR); Schlumberger Technology B.V., 2514 JG The Hague (NL); Schlumberger Holdings Limited, Tortola (VG); PRAD Research and Development Limited, Road Town, Tortola (VG)
(72) Inventor: Khalfallah, Inès, 92130 Issy les Moulineaux (FR); Loizzo, Matteo, 75005 Paris (FR); Lecampion, Brice, 75014 Paris (FR); Dennis, Katia, 91420 Morangis (FR)
(74) Representative: Vandermolen, Mathieu

(57) **Abstract**

A self-healing cement for use in wells in which carbon dioxide is injected, stored or extracted, comprises a carbonaceous material. In the event of cement-matrix failure, or bonding failure between the cement/casing interface or the cement/borehole-wall interface, the material swells when contacted by carbon dioxide. The swelling seals voids in the cement matrix, or along the bonding interfaces, thereby restoring zonal isolation.

## Description

### BACKGROUND OF THE INVENTION

The statements in this section merely provide background information related to the present disclosure and may not constitute prior art.

This invention relates to compositions and methods for treating subterranean formations, in particular, compositions and methods for cementing and completing wells which penetrate subterranean formations, into which carbon dioxide is injected, stored or extracted.

During the construction of subterranean wells, it is common, during and after drilling, to place a tubular body in the wellbore. The tubular body may comprise drillpipe, casing, liner, coiled tubing or combinations thereof. Usually, a plurality tubular bodies are placed sequentially and concentrically, with each successive tubular body having a smaller diameter than the previous tubular body, set at selected depths as drilling progresses. The purpose of the tubular body is to support the wellbore and to act as a conduit through which desirable fluids from the well may travel and be collected. The tubular body is normally secured in the well by a cement sheath. The cement sheath provides mechanical support and hydraulic isolation between the zones or layers that the well penetrates. The latter function is important because it prevents hydraulic communication between zones that may result in contamination. For example, the cement sheath blocks fluids from oil or gas zones from entering the water table and polluting drinking water. In addition, to optimize a well's production efficiency, it may be desirable to isolate, for example, a gas-producing zone from an oil-producing zone.

The cement sheath achieves hydraulic isolation because of its low permeability. In addition, intimate bonding between the cement sheath and both the tubular body and borehole is necessary to prevent leaks. However, over time the cement sheath can deteriorate and become permeable. Alternatively, the bonding between the cement sheath and the tubular body or borehole may become compromised. The principal causes of deterioration and debonding include physical stresses associated with tectonic movements, temperature changes and chemical deterioration of the cement.

There have been several proposals to deal with the problems of cement-sheath deterioration. One approach is to design the cement sheath to mechanically survive physical stresses that may be encountered during its lifetime (US 6,296,057). Another approach is to employ additives that improve the physical properties of the set cement. US 6,458,198 describes the addition amorphous metal fibers to improve the strength and impact resistance. EP 1129047 and WO 00/37387 describe the addition of flexible materials (rubber or polymers) to confer a degree of flexibility to the cement sheath. WO 01/70646 describes cement compositions that are formulated to be less sensitive to temperature fluctuations during the setting process.

A number of proposals have been made concerning "self-healing" concretes in the construction industry. The concept involves the release of chemicals inside the set-concrete matrix. The release is triggered by matrix disruption arising from mechanical or chemical stresses. The chemicals are designed to restore and maintain the concrete-matrix integrity. These are described, for example, in US 5,575,841, US 5,660,624, US 6,261,360 and US 6,527,849. This concept is also described in the following publication: Dry, CM: "Three designs for the internal release of sealants, adhesives and waterproofing chemicals into concrete to reduce permeability." Cement and Concrete Research 30 (2000) 1969-1977. None of these concepts are immediately applicable to well-cementing operations because of the need for the cement slurry to be pumpable during placement, and because of the temperature and pressure conditions associated with subterranean wells.

More recently, self-healing cement systems have been developed that are tailored to the mixing, pumping and curing conditions associated with cementing subterranean wells. For example, EP 1623089 describes the addition of superabsorbent polymers, that may be encapsulated. If the permeability of the cement matrix rises, or the bonding between the cement sheath and the tubular body or borehole wall is disrupted, the superabsorbent polymer becomes exposed to formation fluids. Most formation fluids contain some water, and the polymer swells upon water contact. The swelling fills voids in the cement sheath, restoring the low cement-matrix permeability. Likewise, should the cement/tubular body or cement/borehole wall bonds become disrupted, the polymer will swell and restore isolation. WO 2004/101951 describes the addition of rubber particles that swell when exposed to liquid hydrocarbons. Like the superabsorbent polymers, the swelling of the rubber particles restores and maintains zonal isolation.

Detailed information concerning the performance of self-healing cements in the oilfield may be found in the following publications: Le Roy-Delage S et al.: "Self-Healing Cement System-A Step Forward in Reducing Long-Term Environmental Impact," paper SPE 128226 (2010); Bouras H et al.: "Responsive Cementing Material Prevents Annular Leaks in Gas Wells," paper SPE 116757 (2008); Roth J et al.: "Innovative Hydraulic Isolation Material Preserves Well Integrity," paper SPE 112715 (2008); Cavanagh P et al.: "Self-Healing Cement-Novel Technology to Achieve Leak-Free Wells," paper SPE 105781 (2007).

The aforementioned technologies and publications are mainly concerned with traditional hydrocarbon producing wells. However, the well-cementing industry also has to contend with wells into which carbon dioxide is injected, in which carbon dioxide is stored or from which carbon dioxide is recovered. Carbon dioxide injection is a well-known enhanced oil recovery (EOR) technique. In addition, there are some oil and gas wells whose reservoirs naturally contain carbon dioxide.

A relatively new category of wells involving carbon dioxide is associated with carbon-sequestration projects. Carbon sequestration is a geo-engineering technique for the long-term storage of carbon dioxide or other forms of carbon, for various purposes such as the mitigation of "global warming". Carbon dioxide may be captured as a pure byproduct in processes related to petroleum refining or from the flue gases from power plants that employ fossil fuels. The gas is then usually injected into subsurface saline aquifers or depleted oil and gas reservoirs. One of the challenges is to trap the carbon dioxide and prevent leakage back to the surface; maintaining a competent and impermeable cement sheath is a critical requirement.

The previously disclosed self-healing cement systems are concerned with traditional wells and swell when contacted by water and/or hydrocarbons; none of these aims at behavior of the cement sheath when contacted by carbon dioxide; therefore, despite the valuable contributions of the prior art, there remains a need for a self-healing cement system for wells involving carbon dioxide.

### SUMMARY OF THE INVENTION

The present invention allows improvements by providing cement systems that are self healing in a carbon-dioxide environment, and methods by which they may be prepared and applied in subterranean wells.

In an aspect, the invention relates to the use of a carbonaceous material in a pumpable cement slurry that ,once pumped downhole, sets to form a cement sheath that will self repair when contacted by carbon dioxide.

In an aspect, the invention relates to a method for maintaining zonal isolation in a subterranean well into which carbon dioxide is injected, stored or extracted.

In a further aspect of the invention is a method for cementing a subterranean well having a borehole, in which carbon dioxide is injected, stored or extracted.

### DETAILED DESCRIPTION

At the outset, it should be noted that in the development of any such actual embodiment, numerous implementation-specific decisions must be made to achieve the developer's specific goals, such as compliance with system related and business related constraints, which will vary from one implementation to another. Moreover, it will be appreciated that such a development effort might be complex and time consuming but would nevertheless be a routine undertaking for those of ordinary skill in the art having the benefit of this disclosure. In addition, the composition used/disclosed herein can also comprise some components other than those cited. In the summary of the invention and this detailed description, each numerical value should be read once as modified by the term "about" (unless already expressly so modified), and then read again as not so modified unless otherwise indicated in context. Also, in the summary of the invention and this detailed description, it should be understood that a concentration range listed or described as being useful, suitable, or the like, is intended that any and every concentration within the range, including the end points, is to be considered as having been stated. For example, "a range of from 1 to 10" is to be read as indicating each and every possible number along the continuum between about 1 and about 10. Thus, even if specific data points within the range, or even no data points within the range, are explicitly identified or refer to only a few specific, it is to be understood that inventors appreciate and understand that any and all data points within the range are to be considered to have been specified, and that inventors possessed knowledge of the entire range and all points within the range.

As stated earlier, there is a need for self-healing cement systems that operate in an environment containing carbon dioxide. In a manner analogous to the self-healing mechanisms described earlier, such cement systems would contain materials that swell in the presence of carbon dioxide. And, the amount of swelling would have to be sufficient to close voids that may appear in the cement sheath.

In the literature, there are several journal articles concerning the effects of carbon dioxide on the behavior of coal such as: Busch A et al.: "High-Pressure Sorption of Nitrogen, Carbon Dioxide and their Mixtures on Argonne Premium Coals," Energy Fuels, 2007, 21 (3) 1640-1645; Day S et al.: "Supercritical Gas Sorption on Moist Coals," International Journal of Coal Geology 74 (2008) 203-214; Day S et al.: Effect of Coal Properties on CO2 Sorption Capacity Under Supercritical Conditions," International Journal of Greenhouse Gas Control 2 (2008) 342-352; Krooss BM et al.: "High-Pressure Methane and Carbon Dioxide Adsorption on Dry and Moisture-Equilibrated Pennsylvanian Coals," International Journal of Coal Geology, 51 (2002) 69-92; Mazumder, S et al.: "Capillary Pressure and Wettability Behavior of Coal-Water-Carbon Dioxide System," paper SPE 84339 (2003); Ozdemir E et al.: "CO2 Adsorption Capacity of Argonne Premium Coals," Fuel, 83 (2004) 1085-1094; Pan Z et al.: "A Theoretical Model for Gas Adsorption-Induced Coal Swelling," International Journal of Coal Geology, 69 (2006) 243-252; Reucroft PJ and Sethuraman AR: "Effect of Pressure on Carbon Dioxide Induced Coal Swelling," Energy Fuels, 1987, 1 (1) 72-75; or Siriwardane H et al.: "Influence of Carbon Dioxide on Coal Permeability Determined by Pressure Transient Methods," International Journal of Coal Geology, 77 (2009) 109-118.

Most of the references are aimed at studying the feasibility of sequestering carbon dioxide and other acid gases in coal seams. These studies discuss various advantages and drawbacks of such sequestration; those skilled in the art will appreciate that the chemical environment associated with well cementing is far different from that of a coal deposit. For example, the pH of most hydraulic cements is very high-usually greater than 12. In addition, the formation fluids encountered downhole are frequently very saline. Salinity and pH are known to affect the surface behavior of many materials, and the manner by which the materials interact with external species.

The inventors surprisingly found that certain carbonaceous materials do have utility in the context of well cementing.

An aspect of the invention is a method for maintaining zonal isolation in a subterranean well having a borehole, into which carbon dioxide is injected, stored or extracted. First, a tubular body is installed inside the borehole of the well, or inside a previously installed tubular body. Second, a pumpable aqueous cement slurry containing a material that swells when contacted by carbon dioxide is pumped down the borehole. Then, the slurry is allowed to set and harden. After that, in the event of cement-matrix failure, or failure of the cement/tubular body or cement/borehole wall bonds, exposing the set cement to wellbore fluids that contain carbon dioxide the material will swell and fill voids within the cement matrix or at the cement/tubular body or cement/borehole wall interfaces, thereby restoring zonal isolation.

A further aspect of the invention is a method for cementing a subterranean well having a borehole in which carbon dioxide is injected, stored or extracted. First, a tubular body is installed inside the borehole of the well, or inside a previously installed tubular body. Then, a pumpable aqueous cement slurry containing a material that swells when contacted by carbon dioxide is pumped down the borehole.. After that, the slurry is allowed to set and harden. Persons skilled in the art will recognize that this aspect of the invention encompasses both primary and remedial cementing operations. For primary cementing, the method may be the traditional process of pumping the cement slurry down the casing and up the annulus, or the reverse-cementing process by which the slurry is pumped down the annulus and up the casing. Remedial processes include plug cementing and squeeze cementing. Plug cementing may be particularly useful when the operator wishes to safely seal a well containing carbon dioxide. The remedial processes may be performed in either a cased-hole or open-hole environment.

With respect now to a further aspect, the invention is a method for cementing a subterranean well having a borehole in which carbon dioxide is injected, stored or extracted. First, a tubular body is installed inside the borehole of the well, or inside a previously installed tubular body. Then, a pumpable aqueous cement slurry containing a material that swells when contacted by carbon dioxide is pumped down the borehole. After that, the slurry is allowed to set and harden.

For all aspects of the invention, the material may be a carbonaceous material. Preferred materials comprise one or more members of the list comprising coal, petroleum coke, graphite and gilsonite. The concentration of the material may be between about 5% and 50% by volume of solids in the cement slurry, also known as "by volume of blend (BVOB)." The preferred range is between about 10% and 40% BVOB. For optimal performance, the particle-size distribution of the material is preferably such that the minimum d₁₀ is about 100 µm, and the maximum d₉₀ is about 850 µm. The definition of d₁₀ is: the equivalent diameter where 10 wt% of the particles have a smaller diameter (and hence the remaining 90% is coarser). The definition of d₉₀ may be derived similarly. Persons skilled in the art will recognize that the present inventive use of carbonaceous materials like coal and gilsonite is different and distinct from their use as cement extenders (i.e., to reduce the amount of cement or to reduce the cement-slurry density).

In fact, the present invention broadly relates to the use of a carbonaceous material in a pumpable cement slurry that once pumped downhole sets to form a cement sheath that will self repair when contacted by carbon dioxide. Preferably the carbonaceous material is petroleum coke.

For all aspects of the invention the cement may additionally comprise one or more members of the list comprising Portland cement, calcium aluminate cement, fly ash, blast furnace slag, lime-silica blends, geopolymers, Sorel cements and chemically bonded phosphate ceramics. The cement slurry may further comprise one or more members of the list comprising dispersing agents, fluid-loss-control agents, set retarders, set accelerators and antifoaming agents. Also, the tubular body may comprise one or more members of the list comprising drillpipe, casing, liner and coiled tubing. In addition the borehole may penetrate at least one fluid-containing reservoir, the reservoir preferably containing fluid with a carbon dioxide concentration greater than about five moles per liter.

### EXAMPLES

The following example serves to further illustrate the invention.

### EXAMPLE 1

Several particles of petroleum coke were placed inside a pressure cell equipped with a window that allows one to observe the behavior of materials within the cell. The cell supplier is Temco Inc., located in Houston, Texas USA. The cell temperature is also adjustable. A camera captures images from inside the pressure cell, and image-analysis software is employed to interpret the behavior of materials inside the cell. After the petroleum coke particles were introduced into the cell, the cell was sealed.

The first test was conducted at 22°C. The particles were allowed to equilibrate at the test temperature for 2 hours. The camera captured an image of the particles. Then, carbon dioxide gas was introduced, and the pressure was gradually increased to 21 MPa. The particles were exposed to the gas for a 2-hour period. The camera captured another image of the particles inside the cell. The cross-sectional area of the particles was observed to increase by 6%.

A second test was conducted at 42°C. The particles were allowed to equilibrate at the test temperature for 2 hours. The camera captured an image of the particles. Then, carbon dioxide gas was introduced, and the pressure was gradually increased to 21 MPa. The particles were exposed to the gas for a 2-hour period. The camera captured another image of the particles inside the cell. The cross-sectional area of the particles was observed to increase by 2.1 %.

## Claims

1. Use of a carbonaceous material in a pumpable cement slurry that once pumped downhole sets to form a cement sheath that will self repair when contacted by carbon dioxide.

2. Use according to claim 1 wherein the carbonaceous material is petroleum coke.

3. A method for maintaining zonal isolation in a subterranean well having a borehole in which carbon dioxide is injected, stored or extracted, comprising the following steps:
(i) installing a tubular body inside the borehole of the well, or inside a previously installed tubular body;
(ii) pumping aqueous cement slurry comprising a material that swells when contacted by carbon dioxide into the borehole;
(iii) allowing the cement slurry to set and harden;
(iv) in the event of cement-matrix or bonding failure, exposing the set cement to wellbore fluids that contain carbon dioxide; and
(v) allowing the material to swell, thereby restoring zonal isolation.

4. A method for cementing a subterranean well having a borehole in which carbon dioxide is injected, stored or extracted, comprising the following steps:
(i) installing a tubular body inside the borehole of the well, or inside a previously installed tubular body;
(ii) pumping an aqueous cement slurry comprising a material that swells when contacted by carbon dioxide into the borehole; and
(iii) allowing the cement slurry to set and harden inside the annular region.

5. The method of claim 4, wherein the cementing process is primary cementing, and the cement slurry is either pumped down the interior of the tubular body and up through the annular region, or down the annular region and up the interior of the tubular body.

6. The method of claim 4, wherein the cementing process is remedial cementing, performed in either a cased or open hole.

7. The method of any one of claims 3-6, wherein the material is a carbonaceous material.

8. The method of any one of claims 3-7, wherein the material comprises one or more members of the list comprising coal, petroleum coke, graphite and gilsonite.

9. The method of any one of claims 3-8, wherein the concentration of the material in the cement matrix is between about 5 percent and about 50 percent by volume of solid blend (BVOB).

10. The method of any one of claims 3-9, wherein the concentration of the material in the cement matrix is between about 10 percent and 40 percent by volume of solid blend (BVOB).

11. The method of any one of claims 3-10, wherein the particle-size-distribution of the material is such that the minimum d₁₀ is about 100 µm; and the maximum d₉₀ is about 850 µm.

12. The method of any one of claims 3-11, wherein the cement comprises one or more members of the list comprising Portland cement, calcium aluminate cement, fly ash, blast furnace slag, lime-silica blends, geopolymers, Sorel cements and chemically bonded phosphate ceramics.

13. The method of any one of claims 3-12, wherein the cement slurry further comprises one or more members of the list comprising dispersing agents, fluid-loss-control agents, set retarders, set accelerators and antifoaming agents.

14. The,method of any one of claims 3-13, wherein the tubular body comprises one or more members of the list comprising drillpipe, casing, liner and coiled tubing.

15. The method of any one of claims 3-14, wherein the borehole penetrates at least one fluid-containing reservoir, the reservoir containing fluid with a carbon dioxide concentration greater than about five moles per liter.
